# EUROPEAN PATENT APPLICATION

(11) **EP 2 996 237 A1**
(43) Date of publication of application: **16.03.2016**
(21) Application number: 14290277.4
(22) Date of filing: 15.09.2014
(51) Int. Cl.: H02M 3/337, H02M 3/335, H02J 3/38

(54) **Resonant bidirectional DC/DC converter**

(71) Applicant: ALSTOM Technology Ltd, 5400 Baden (CH)
(72) Inventor: GARCIA SOTO, Guillermo, 91300 Massy (FR)
(74) Representative: Day, Caroline Margaret

(57) **Abstract**

An apparatus (200) for exchanging power between DC power generation apparatus (202) and a power distribution system and a method thereof are disclosed. Power from the power distribution system is supplied to the DC power generation apparatus (202) via a resonant transformer circuit (201). In some operational modes, the resonant transformer circuit (201) may be operated at a frequency above its resonant frequency.

## Description

The present invention relates in particular but not exclusively to resonant transformer circuit(s), which may comprise part of DC/DC converter(s), and to the control thereof.

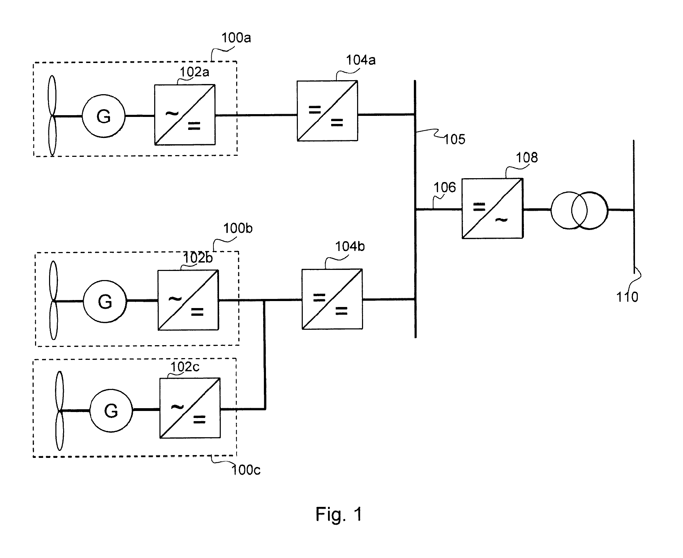

An example of Direct Current (DC) generation apparatus, in this case a wind farm with three turbines 100a-c, and its connections to a power distribution system (in this example, an AC power distribution grid 110) is shown in Figure 1. As is known to the skilled person, the turbines 100a-c each have an AC-DC converter 102a-c and are connected singly (turbine 100a) or collectively as a cluster (turbines 100b, 100c) to a DC-DC converter 104a-b. The DC/DC converters 104a,b associated with a farm are connected to a DC bus 105 and the total DC power output of the farm is transmitted via a DC line 106. In the case of an off-shore wind farm, this DC line may be a subsea cable (and may be an HVDC line). This DC line 106 links the wind farm to a land based DC-AC converter 108, which in turn is connected to the AC power distribution grid 110.

Power from each turbine 100a therefore undergoes three conversion stages. Generally, at each converter stage, embedded voltage and current inner control loops are used. The interrelation of the different converters is complex and control of one can affect the operating conditions at other points in the system. This interrelationship makes parallel and/or serial scalability, as well as management of fault situations, difficult. Adjusting control protocols and responding to changing conditions in such apparatus is expensive and time consuming.

In addition it can be the case that a generator, generally provided to export power to the power distribution network, instead consumes power.

To consider a specific example, generation apparatus such as a wind farm may from time to time require power it is not able to produce itself. In this case of a wind farm which may have stopped due to low winds, on start-up power may be used to turn the blade assembly into the wind, to set the pitch of the blades, to start the blades turning, and, in some turbine designs, to magnetise parts of the turbine. The requirement to consume energy may be seen on start-up, but can also occur at other points in operation of a wind turbine or farm, for example to maintain operation of safety or monitoring apparatus when the wind is too low to operate the turbine/farm.

In some cases, it is known to provide a starter motor in association with a turbine to perform some or all of these functions. In other cases, it is known to supply energy from the power distribution system. This requires reversal of the power flow, which is again complex in systems with complicated control systems. In addition, in particular if the voltage level on the generation side is low (as may typically be the case for a non-operational generator, or on start up) there is a risk of inrush currents as power is first supplied, requiring management and control which, as noted above, is difficult to achieve. This in turn can lead to the risk of faults such as short circuits.

While a wind farm has been discussed by way of example, such power requirement is also seen with other types of generation apparatus.

There is therefore a desire to provide a simple solution for power transfer between generation apparatus and a power distribution system.

According to a first aspect of the invention, there is provided a method of controlling a resonant transformer circuit to exchange power between DC power generation apparatus and a power distribution system, the method comprising operating the resonant transformer circuit at a frequency above its resonant frequency to allow power transfer from the power distribution system to the DC power generation apparatus.

The DC power generation apparatus (which may comprise one or more generators, such as a wind turbine, or turbine cluster, or photovoltaic array(s), or any other generation apparatus providing a DC output, either directly or via a converter (in which case the DC generation apparatus may comprise one or more converters) may generally be provided to supply power to a power distribution system such as a power grid or other electrical network. However, there are circumstances in which DC generation apparatus may consume power, for example on start up, or if power generation by the generation apparatus is or falls below a threshold level. In such circumstances, power may be drawn from the power distribution system but, in particular if the voltage level on the generation side of the transformer is low, there is a risk of inrush currents, possibly resulting in other faults. By providing a resonant transformer circuit and operating the transformer at a frequency which is above the resonant frequency of the resonant transformer frequency, inrush currents are prevented in a simple manner.

To consider this further, the resonant circuit has its minimum impedance at when operated at its resonant frequency value. Increasing or decreasing the operational frequency value from this point increases the impedance and therefore acts reduce the inrush current. The greater the difference between the operational frequency and the resonance value, the greater the impedance is. This difference can therefore be selected to reduce inrush current as appropriate for a given system. Setting the operational frequency of the circuit above, rather than below, the resonant frequency has particular advantages. For example, operating the transformer below the resonant frequency could result in harmonics, whereas operating above this frequency result in a close to sinusoidal current wave form. However, increasing the switching frequency also results in increased switching loses. Therefore, in some examples, the difference between the operational frequency and the resonant frequency may be selected by balancing the desire to limit inrush currents and the desire to limit switching losses, and can be selected by the skilled person depending on the operational conditions and/or circumstance.

The method may further comprise operating the resonant transformer circuit at a frequency substantially equal to its resonant frequency to allow power transfer from the DC power generation to the power distribution system apparatus.

Such a method has the advantage of using a single, bi-directional transformer circuit to both provide power to and export power from the generation apparatus. When exporting power from the generation apparatus, controlling the transformer to operate at the resonant frequency allows for favourable (e.g. low or zero voltage and/or current) switching conditions.

The method may further comprise controlling the transformer circuit to change from operation of the transformer circuit at a frequency above the resonant frequency to operation of the transformer circuit at a frequency substantially equal to the resonant frequency, wherein the step of controlling comprises determining the voltage across the DC power generation apparatus, and if the voltage exceeds a first threshold, operating the resonant transformer circuit at its resonant frequency and, when the voltage is below a second threshold, operating the resonant transformer circuit above its resonant frequency. These modes of operation may be thought of as 'importing' (in which power is imported to the generation apparatus from the distribution network) and 'exporting' modes.

As a DC power generation apparatus collects energy, the voltage across the generation apparatus will tend to rise. Such a method therefore conveniently allows a DC power generation apparatus to import power until conditions for delivering energy are achieved (for example until an energy level is exceeded and/or reaching an exporting threshold), at which point it can operate to export power to the network. While the first and second thresholds may be the same, in some examples they may be different- for example, the first threshold may be higher or lower than the second threshold. This prevent unnecessary switching between import and export modes if the voltage were to fluctuate around a single threshold level. In a particular example relating to a 6MW/50kV DC wind turbine, for example, the threshold for switching from importing to exporting power could be around 40kV, whereas the switch from exporting to importing power could be set at around 30kV.

The method may further comprise regulating the power distribution side transformer voltage to a predetermined voltage value. If the voltage is regulated, this also clamps the voltage on the generation side of the transformer. As the generation apparatus ramps up in energy production, the voltage thereof will rise and, once it exceeds the clamped generation apparatus transformer voltage value, current tends to flow from generation apparatus to distribution system side. Such regulation may be achieved by, for example, providing a converter such as a voltage source converter (VSC) between the transformer and a power distribution system, which could serve to regulate the voltage. This therefore provides a form of 'self regulation' of the direction of the power flow.

The method may further comprise controlling the transformer circuit by controlling switches associated therewith with a substantially constant duty cycle. The use of a constant duty cycle allows simple control strategies and therefore allows simple control technologies to be employed, which in turn provides for more robust apparatus and may allow a reduction in apparatus costs. Such simple systems also allow for scalability as the method may be readily applied to several similar transformers.

According to another aspect of the invention, there is provided a transformer module comprising a control unit, a transformer and, on a first side of the transformer, a serial resonant circuit and a first set of switch modules and, on a second side thereof, a second set of switching modules,; wherein the control unit is arranged to control the transformer module to:
for a first direction of power flow though each transformer module, operate one set of switch modules at a frequency substantially equal to the resonant frequency of the resonant circuit, and
for a second direction of power flow through each transformer module, operate the other set of switch modules at a frequency above the resonant frequency of the resonant circuit.

Such a transformer module may be arranged to operate according to the method of the first aspect of the invention and may, for example, comprise a resonant transformer circuit.

In one convenient arrangement, each set of switch modules comprises a pair of switching modules arranged in a half bridge configuration. This provides a simple arrangement, the control of which is well understood by the skilled person. However, alternative configurations, including full bridge configuration(s), and/or configuration(s) including half and full-bridge sets of switch modules, are possible.

The resonant circuit may be provided on the low voltage side of the transformer module. Each transformer module may be arranged to act as a step up transformer in the first direction of power flow and as a step-down transformer in the second direction of power flow. This is convenient where, for example, the transformer module is provided between a DC power generation apparatus and a power distribution system. The low voltage side may be the DC power generation apparatus side, the voltage of which is stepped up for transmission via an higher voltage line. This arrangement may be convenient for example for large generation apparatus, such as wind farms, including off-shore wind farms. As the skilled person is aware, the use of an HVDC power line to transfer power from, for example, an off-shore wind farm to an on-shore power distribution system (usually via a DC/AC converter which may comprise a VSC) helps minimise losses in power transfer.

In preferred embodiments, the control unit is arranged to control the transformer such that, when one switch module set is being operated, the other switch module set is dormant. In other words, only one set is actively controlled at any time, meaning that control of the transformer module is simple. In some examples, one, some or each switching module comprises a switch in parallel with a diode. This allows the switch modules to act as rectifiers when the switches are open. The switches may be open when the switch modules are dormant.

According to another aspect of the invention, there is provided a bi-directional DC/DC converter comprising at least one transformer module according to the second aspect of the invention.

According to another aspect of the invention, there is provided a controller for a bidirectional DC/DC converter having at least one transformer module comprising a serial resonant transformer, the controller being to:
for a first direction of power flow though the at least one converter, operate the at least one transformer module at a frequency substantially equal to the resonant frequency thereof; and
for a second direction of power flow through the at least one converter, to operate the at least one transformer module at a frequency above the resonant frequency thereof.

The controller may carry out the method described above, or control the converter described above, for example functioning as the control unit thereof.

The controller may be arranged to receive an indication of the voltage at a first side thereof and is further arranged to control the operational frequency of the at least one transformer module based on the voltage.

In some examples, the controller may be arranged to control a bidirectional DC/DC converter having a plurality of transformer modules. The transformer modules may be interconnected in parallel and/or in series. In other examples, each of a plurality of bidirectional DC/DC converters having resonant transformer modules may be collectively controlled by one controller or may comprise individual controllers arranged to operate to transfer power in the first or second direction. Because the control operations are relatively simple, the control principles described herein may be readily scaled up to operate with more than one transformer module/converter.

According to another aspect, the invention may comprise a method for exchanging power between DC power generation apparatus and a power distribution system, the method comprising providing power from the power distribution system to the DC power generation apparatus via a resonant transformer circuit; wherein the step of providing power from the power distribution system to the DC power generation apparatus comprises operating the transformer circuit at a frequency above the resonant frequency thereof.

The method may further comprise providing power from the DC power generation apparatus to the power distribution system via the resonant transformer circuit, wherein the step of providing power to the power distribution system from the DC power generation apparatus comprises operating the transformer circuit substantially at the resonant frequency thereof.

Further aspects of the invention include apparatus to carry out each method step described above, and methods of use of the apparatus.

Features described in one aspect of the invention may be combined with those of other aspects of the invention.

Embodiments of the invention will now be described, by way of example only, with reference to the following figures in which:
**Figure 1** shows a DC generation apparatus connected to a power distribution system;
**Figure 2** shows an example of a DC/DC converter;
**Figure 3** shows an example of a sensing unit;
**Figures 4A and 5B** show, respectively, switch control in a power export mode and a power import mode; and
**Figures 5 to 7** show examples of DC/DC converters comprising a plurality of transformer circuits connecting DC generation apparatus to a Voltage Source Converter.

Figure 1, as has been discussed above, shows a typical arrangement of components for connecting a DC-collector grid (in the illustrated example, a wind farm) to a power distribution system, in this example an AC power distribution network 110.

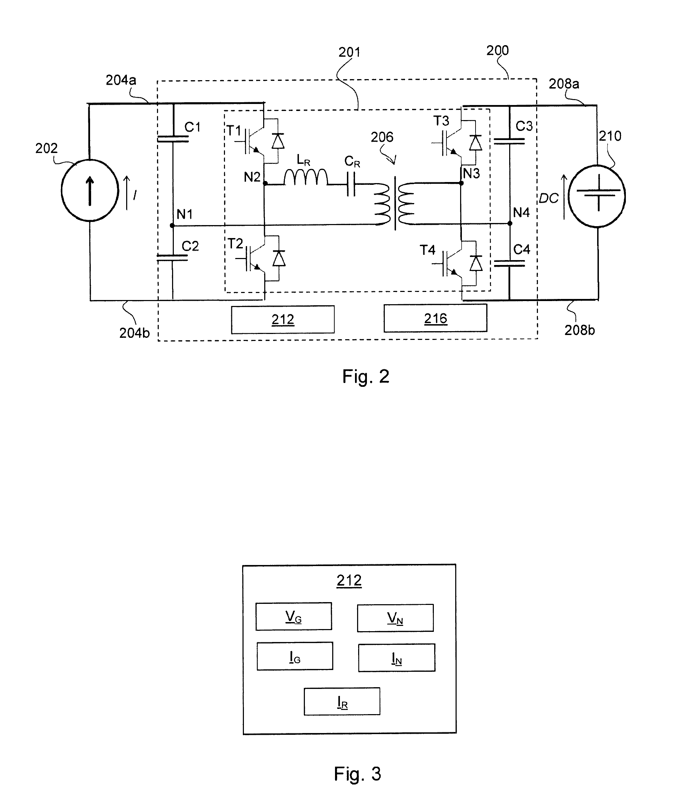

Figure 2 shows a DC/DC converter 200 which could be controlled, according to an embodiment of the invention, to provide a DC/DC converter 104a-b.

The converter 200 of Figure 2 links a DC generation apparatus 202 to the DC side of a DC/AC voltage source converter 210 which exchanges power with an AC distribution grid.

The converter 200 comprises a resonant transformer module 201. For the purpose of this example, the converter 200 comprises a generation apparatus side (to the left of the figure) and a distribution system side (to the right of the figure). The converter 200 is a bi-directional converter, and the generation apparatus 202 may consume power provided by the distribution system. In some examples, the voltage of the generation apparatus 202 will be stepped up, and the voltage of power from the distribution system will be stepped down for use by the generation apparatus. Therefore, in some examples, the generation apparatus side may be seen as the 'low voltage' side of the converter 200, and the distribution system side may be the 'high voltage' side. However, the skilled person will appreciate that the voltage on both sides may be relatively high, up to and including typical HVDC voltage values. In one example, the 'low voltage' side may be in the MVDC range and the high voltage side may be in the HVDC range.

At the generation apparatus side, the converter 200 is coupled to DC power lines 204a, 204b, which are connected to DC generation apparatus 202 such as the output from a wind turbine 102a, or wind turbine cluster (the turbines 100b and 100c of Figure 1 may be referred to as a cluster), a photovoltaic array, a battery assembly, a fuel cell array, DC railway grid, etc.

Also on the generation apparatus side, two link capacitors C1, C2 are arranged in series between the DC power lines 204a, 204b, with a first connection node N1 there between. In this example of a converter 200, which has a half-bridge topology as further set out below, providing two capacitors (or two capacitances) provides a connection mid-point (this would not be required in a full bridge arrangement, which may therefore comprise a single capacitor). In addition, where the generation apparatus acts as a current source (as may be the case for a DC wind turbine), this capacitance collects the charge, effectively converting it in potential difference.

The transformer module 201 comprises, arranged between the DC power lines 204a, 204b, a set of switching modules, in this example comprising two switch modules T1 and T2 arranged in series in a half bridge arrangement, with a second connection node N2 therebetween. Also within the transformer module 201, a resonant transformer circuit is formed of an inductor L_{R}, a capacitor C_{R} and a transformer 206. The components of the transformer circuit are connected in series between the first connection node N1 and the second connection node N2. On the distribution system side of the transformer module 201, there is again provided a set of switching modules, in this example a series connection of two switching modules T3, T4 arranged in a half-bridge configuration, between distribution system side DC power lines 208a, 208b. A third connection node N3 is provided between the switching modules T3 and T4.

On the distribution system side of the converter 200, a series connection of DC link capacitors C4, C4 is provided between distribution system side DC power lines 208a, 208b.

A fourth connection node N4 is provided between the DC link capacitors C3, C4. The distribution system side of the transformer 206 is connected between the third and fourth connection nodes N3 and N4.

The distribution system side DC power lines 208a, 208b in this example are connected to a Voltage source Converter (VCS) 210, which could serve as the DC-AC converter 108 of Figure 1.

The switching modules T1-T4 each comprise a switch, which may be formed of one or more IGBTs, IGCTs, MOSFETS, etc, arranged in parallel with a diode.

The skilled person will recognize that there are many possible variants of the illustrated converter circuit. For example, the resonant inductor L_{R} could be provided within the transformer 206. The circuit could be arranged as a full bridge on one side of the transformer 206 and a half bridge on the other side, or a full bridge on either side. In particular in conjunction with a full bridge topology, there may be a single link capacitor on either side of the transformer module 201, with one connection being between the transformer 206 and a DC power line 204, 206. Any component may generally be provided by one or more physical components (for example, any capacitor C1-C4 may be provided by a network of capacitors). Other variations will occur to the skilled person.

The converter 200 further comprises a sensing unit 212, comprising a plurality of sensors as described below with reference Figure 3, and a control unit 216 which operates as a controller and is arranged to receive the output of the sensors and to control, amongst other functions, the switching of the switches T1-T4 according to the control instructions.

Figure 3 shows the components of the sensing unit 212. The sensing unit 212 in this example comprises a generation apparatus voltage sensor V_{G}, a generation apparatus current sensor I_{G}, a distribution system side voltage sensor V_{N}, a distribution system side current sensor I_{N}, and a resonant transformer circuit current sensor I_{R}. It will be appreciated that, for the sake of carrying out some aspects of the invention, only the generation apparatus voltage sensor V_{G} is utilised. However, the other sensors may play a role in monitoring the apparatus as a whole.

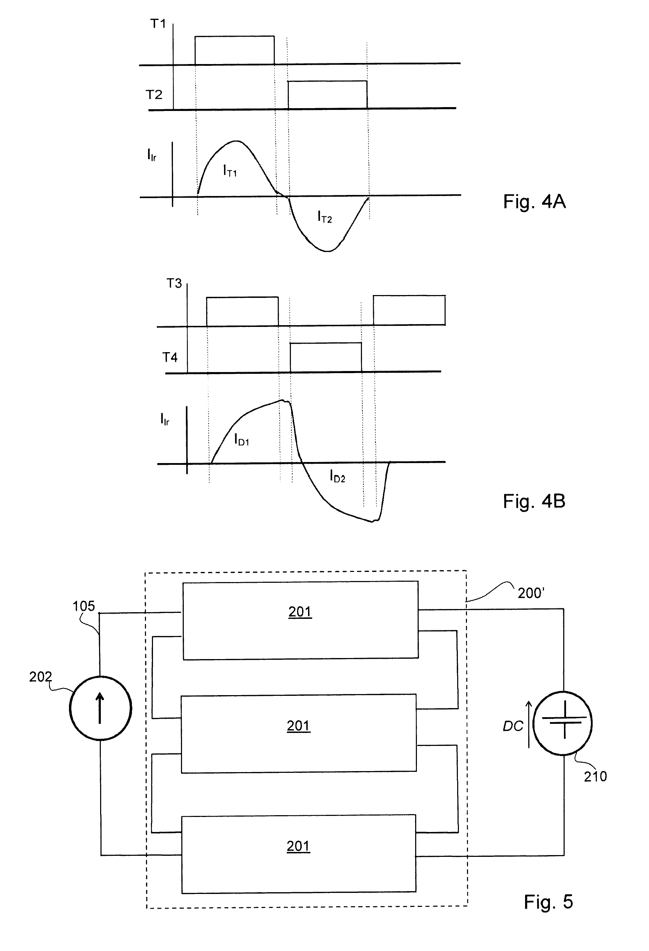

Figure 4A and 4B show modes of switching control. In Figure 4A, the DC generation apparatus 202 is exporting power to the VCS 210. The first set of switch modules T1 and T2 are switched with a constant 50% duty cycle with a constant frequency. The current through each switch of the generation apparatus side switching modules T1 and T2 is also shown in Figure 4A. In this example, the switching frequency is equal to the resonant frequency of the transformer circuit. In other examples, the switching frequency may be below the resonant frequency, but, as will be appreciated by the skilled person, this will result in additional harmonics being seen at the transformer.

In this example, the VSC 210 is voltage regulated, meaning that the generation apparatus side voltage of the transformer 206 is clamped. As the DC generation apparatus 202 produces energy, the voltage between the DC lines 204a, 204b will rise. Once this voltage value is greater than the clamped generation apparatus transformer voltage value, then, assuming that the converter 200 is operated in 'export mode', the current flows from generation apparatus to the distribution system side.

When operated in export mode, only the generation apparatus side set of switch modules T1, T2 are switched on under the control of the control unit 216. Controlling the converter 200 in this manner means it behaves as a voltage adaptor, without requiring any voltage or current loop regulation. As the switching frequency is equal to the resonant frequency, and as can be seen from Figure 4A, this provides a substantially zero current switching condition for switch turn-on and a close to zero current/zero voltage condition as the switches are turned off, which reduces switching losses.

Figure 4B shows operation in a power importing, or charging, mode. If for example the DC generation apparatus 202 is not producing sufficient energy to power circuits such as safety or monitoring circuits (for example, in the case of a wind farm, the wind is too light), or requires energy for start up or the like, power may be transferred from the distribution system to the DC generation apparatus 202. In such a case, the distribution system side set of switch modules T3, T4 may be controlled to switch on under the control of the control unit 216 in a manner as shown in Figure 4B. Here, the switch modules T3, T4 are controlled at over the resonant frequency of the transformer circuit and with a fixed duty cycle. The value with regard to resonant frequency may be set depending on the circumstances. As the operational frequency rises, there will be a reduction in any inrush currents (as discussed below, this relationship is non-linear, and the current will fall relatively quickly with frequency difference compared to resonant frequency). However, rapid switching results in loses, and therefore there will be a practical limit to how high the frequency should be. In a practical example, the frequency may, for example, be above the resonant frequency and below a value equal to double the resonant frequency.

As noted above, the pulse frequency for controlling the distribution system side switching modules T3, T4 is set to be above the resonant frequency. This avoids current inrush, even when the voltage across the generation apparatus DC power lines 204 is very low (e.g. the voltage on a collection bus is zero, or close to zero). Figure 4B also shows the current through the diodes of the generation apparatus switching modules T1, T2. The duty cycle in this example is around 50%, but depends on the operating frequency, power range and switch technology. For a 10kHz frequency, an exemplary duty cycle is 45%, for 1 kHz with an equivalent circuit it may be around 49%.

As the resonant circuit has its minimum impedance when operated at its resonant frequency value, both decreasing and increasing the frequency leads increases the impedance and therefore reduces the inrush current. However, if the operational frequency is that above resonance frequency, this results in continuous operation and close to sinusoidal current wave. Below resonance frequency, discontinuous operation and a current waveform having additional harmonics could be seen, which may adversely impact the transformer. The change in impedance is not linear with respect to the operational frequency: halving the frequency value leads to decreasing the current several times.

When the converter 200 is controlled at constant frequency, constant duty and close to the resonant frequency, it is seen as impedance (characteristic LC impedance). Current transferred is therefore proportional to the ratio of the primary (generation) side voltage of the transformer and secondary (distribution) side. If the distribution voltage is regulated at constant value therefore, the current is proportional to the DC generation apparatus side voltage level. It will be appreciated that, operational frequency and duty cycle are constant, this will be true to some extent in exporting and importing modes. If the converter is operated at close to resonance in exporting mode, the effect is enhanced due to the low impedance.

In one example, the operational mode (i.e. which set of switches T1 and T2, or T3 and T4, are operated) is selected according to the voltage level between the generation apparatus DC power lines 204a, 204b. In some examples, this voltage is detected by the voltage sensor V_{G}. If this is falls below a first threshold voltage, then the converter 200 may be operated in an importing mode. If the voltage rises to exceeds a second threshold voltage, then the converter 200 may be operated in an export mode. Although the first and second threshold could be the same, in some examples they are different, such that there is a degree of hysteresis to the control method. This will avoid repeated switching, if the voltage varies around a threshold value.

An example of such hysteresis control is now discussed in more detail. First, in this example, it is assumed that the generation side voltage value is clamped as the distribution side voltage is controlled (for example by a VSC or the like), and is therefore substantially constant. The generation side voltage is expressed as V_{g}, the distribution side voltage is expressed as V_{d}, and the transformer ratio (when considered as a step-up transformer) is m.

In order to export power from the generation apparatus 202 to the distribution side:
(i) the converter 200 is operated in exporting mode (i.e. the generation side switch modules are active and the distribution side switch modules are dormant); and
(ii) V_{g} >V_{d}/m

In order to import power to the generation apparatus from the distribution apparatus:
(i) the converter 200 is operated in importing mode (i.e. the generation side switch modules are dormant and the distribution side switch modules are active) and
(ii) V_{g} <V_{d}/m

In each case, unless both conditions are met, no power is transferred.

Therefore, by setting a first value of V_{g} to trigger changing from operation in an importing mode to operation in an exporting mode, and a second value of V_{g} to trigger changing from operation in an exporting mode to operation in an importing mode, a degree of hysteresis control is introduced, which in turn allows for energising the system at optimal conditions taking advantage of the clamp effect.

In a particular example, V_{d} is controlled to be 100kV, and the transformer ratio m is 2. The generator apparatus in this example is a DC wind turbine with an expected generated primary voltage V_{g} in the range of 40 - 60 kV.

Hysteresis control is set such that the exporting mode threshold for V_{g} is 40kV, and the importing mode threshold for V_{g} is 30kV

If V_{g} < 30kV then the system is operated in importing mode. When so operated and, as it is also true that V_{g} < V_{d} /2, current flows from the distribution side to the generation side, and the collector voltage value V_{g} increases (if the generation apparatus is operational, then this will contribute to the rise in the collector bus voltage V_{g}). This process continues until V_{g} builds to reach 40kV. At this threshold, the control mode changes to export mode but, until V_{g} reaches 50kV (V_{g} reaches V_{d} /2), no power is actually transferred to the distribution side.

For a converter which is operating in exporting mode, for the purposes of this example, V_{g} initially reaches V_{d/}m (V_{g} ≥50kV), but then the generation apparatus reduces its production such that V_{g} decreases. Current cease to flow from the generation side to the distribution side when V_{g} falls below 50kV. However, only when V_{g} falls further to 30kV is the mode changed to an importing mode such that current will flow again, now from the distribution side to the generation side. Now the imported current can again contribute to V_{g}, until it reaches 40kV.

Of course, the values given above are purely by way of example and indeed, within a given system, the threshold values and/or the clamped voltage value could change.

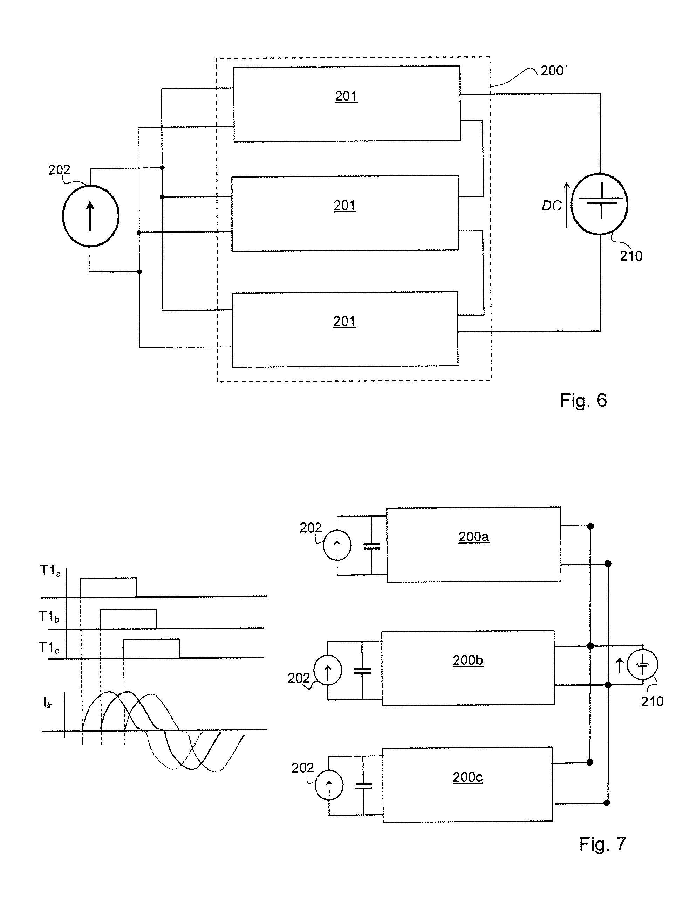

In the example above, a single transformer module is described. However, as is shown schematically in Figures 5 and 6, there may be a plurality of such modules 201 arranged in parallel (as in the converter 200' of Figure 5) or in series (as in the converter 200" of Figure 6) between the power line 204, 206. In such cases, voltage/current sensors for each resonant transformer circuit may be provided to provide an input to a control unit 216. There may be one or more of each of the sensing unit 212, and control unit 216. Of course, there may be additional elements, such as capacitors as shown in Figure 2, which are omitted from Figures 5 and 6 for the sake of simplicity.

The apparatus as described above can be simply controlled to operate in either an importing or an exporting mode, without requiring closed voltage or current regulation loops. Power flow becomes to some extent 'self regulating' through the impedance behavior of the converter 200, 200', 200". Where the distribution side voltage is controlled to a constant value, any current flow will be proportional to generation apparatus side voltage. This leads to a robust system, which in turns allows for scalability of the power range (for example by providing a number of converters in parallel, as shown in Figure 5).

The methods set out herein allow for easy interleaving of several converters due to static (in steady state) converter frequency value. One example is shown in Figure 7 which illustrates parallel connection of several converters 200a, b, c which are operated at fixed frequency and fixed duty, it is easy to coordinated the command pulses between the modules. For instance in the illustrated example comprising three modules, the command signals for a given switch (in the figure, the signal applied to T1ₐ, _{b, c} in each of the converters 200a, b, c is shown to the left of the figure) is offset by 1/3^{rd} of the switching period. Not only does this prevent any adverse effect on the performance of the apparatus, it could have an advantage in that the necessary output capacitance could be divided by three.

While the invention has been illustrated and described in detail in the drawings and foregoing description, such illustration and description are to be considered illustrative or exemplary and not restrictive; the invention is not limited to the disclosed embodiments. Unless expressly stated otherwise the various features described may be combined together and features from one embodiment may be combined with features from another embodiment.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality and a single feature or other unit may fulfil the functions of several units recited in the claims. Any reference signs in the claims should not be construed as limiting the scope.

## Claims

1. A method of controlling a resonant transformer circuit to exchange power between DC power generation apparatus and a power distribution system, comprising operating the resonant transformer circuit at a frequency above its resonant frequency to allow power transfer from the power distribution system to the DC power generation apparatus.

2. A method according to claim 1 which further comprises operating the resonant transformer circuit at a frequency substantially equal to its resonant frequency to allow power transfer from the DC power generation to the power distribution system apparatus.

3. A method according to claim 2 which further comprises controlling the transformer circuit to change from operation of the transformer circuit at a frequency above its resonant frequency to operation of the transformer circuit at a frequency substantially equal to its resonant frequency, wherein the step of controlling comprises determining the voltage across the DC power generation apparatus, and if the voltage exceeds a first threshold, operating the resonant transformer circuit above its resonant frequency and, when the voltage is below a second threshold, operating the resonant transformer circuit at its resonant frequency.

4. A method according to claim 3 in which the first and second thresholds are different.

5. A method according to any preceding claim which further comprises controlling a power distribution side transformer voltage to a predetermined voltage value.

6. A method according to any preceding claim which further comprises controlling switches of the transformer circuit with a substantially constant duty cycle.

7. A transformer module comprising a control unit, a transformer and, on a first side of the transformer, a resonant circuit and a first set of switch modules and, on a second side of the transformer, a second set of switch modules;
wherein the control unit is arranged to control the transformer module to:
for a first direction of power flow though the transformer module, operate one set of switch modules at a frequency substantially equal to the resonant frequency of the resonant circuit, and
for a second direction of power flow through the converter, operate the other set of switch modules at a frequency above the resonant frequency of the resonant circuit.

8. A transformer module according to claim 7 in which each set of switch modules is a pair of switch modules arranged in a half bridge configuration.

9. A transformer module according to claim 7 or claim 8 in which the resonant circuit is provided on the low voltage side of the transformer module and in which the transformer module is arranged to act as a step up transformer in first direction of power flow and as a step-down transformer in the second direction of power flow.

10. A transformer module according to any of claims 7 to 9 in which the control unit is arranged to control the transformer such that, when one switch module set is being operated, the other switch module set is dormant.

11. A bidirectional DC/DC converter comprising at least one transformer module according to any of claims 7 to 10.

12. A controller for at least one bidirectional DC/DC converter having at least one transformer module comprising a serial resonant transformer, the controller being to:
for a first direction of power flow though the converter, operate the at least one transformer module at a frequency substantially equal to the resonant frequency thereof; and
for a second direction of power flow through the converter, to operate the at least one transformer module at a frequency above the resonant frequency thereof.

13. A controller according to claim 12 in which the controller is arranged to receive an indication of the voltage at a first side thereof and is further arranged to control the operational frequency of the at least one transformer module based on the voltage.

14. A controller according to claim 12 or 13 which is arranged to control a converter comprising a plurality of transformer modules.

15. A method for exchanging power between DC power generation apparatus and a power distribution system, the method comprising providing power from the power distribution system to the DC power generation apparatus via a resonant transformer circuit; wherein the step of providing power from the power distribution system to the DC power generation apparatus comprises operating the transformer circuit at a frequency above the resonant frequency thereof.
